# EUROPEAN PATENT SPECIFICATION

(11) **EP 4 208 120 B1**
(45) Date of publication and mention of the grant of the patent: **26.02.2025**
(21) Application number: 21786770.4
(22) Date of filing: 01.09.2021
(51) Int. Cl.: A61C 1/00, A61C 3/025, B24C 7/00

(54) **HANDPIECE, ASSEMBLY OF A NOZZLE ARRANGEMENT AND A HANDPIECE HANDPIECE, AND A METHOD FOR CONNECTING A HANDPIECE AND A NOZZLE ARRANGEMENT**
HANDSTÜCK, ANORDNUNG AUS EINER DÜSENANORDNUNG UND EINEM HANDSTÜCK UND VERFAHREN ZUM VERBINDEN EINES HANDSTÜCKS UND EINER DÜSENANORDNUNG
PIÈCE À MAIN, ASSEMBLAGE D'UN ENSEMBLE BUSE ET D'UNE PIÈCE À MAIN ET MÉTHODE POUR CONNECTER UNE PIÈCE À MAIN ET UN DISPOSITIF DE BUSE

(30) Priority: 02.09.2020 EP 20193997
(43) Date of publication of application: 12.07.2023
(73) Proprietor: Ferton Holding S.A., 2800 Delémont (CH)
(72) Inventor: BEANI, Florent, 01170 Gex (FR)
(74) Representative: Müller Schupfner & Partner Patent- und Rechtsanwaltspartnerschaft mbB (Muc)
(86) International application number: PCT/EP2021/074164
(87) International publication number: WO 2022/049145

(56) References cited:
- EP-A1- 1 354 565
- EP-A1- 2 965 708
- CN-U- 209 107 639

## Description

The present invention concerns a handpiece, an assembly of a nozzle arrangement and a handpiece and a method for connecting a handpiece and a nozzle arrangement.

In particular, the handpiece is used for a powder jet device, which ejects a stream, formed by a powder-gas-mixture being surrounded or sleeved by a fluid, in particular water. For such a nozzle head, the handpiece needs to provide both the powder-gas-mixture and the fluid to the nozzle head.

For enhancing reliability and for avoiding plastic cracking, a monoblock screwing assembly has been developed for realizing a connection between the nozzle arrangement and the handpiece. A connector including the monoblock screwing assembly is part of the handpiece. The screwing assembly establishes a screwing mechanism for screwing the nozzle arrangement into the connector, the connector forming a kind of nut for the nozzle arrangement, being screwed into the connector by a rotational movement.

This rotational movement for connecting the nozzle arrangement to the connector makes it necessary that a channel, being realized in the interface region between the handpiece and the nozzle arrangement and being intended to transport the fluid to the supply line of the nozzle element, is formed such that a rotational movement is possible. As a result a funnel like or conical shape has been established for the part of the channel transporting the fluid in the region directly upstream to the supply line of the nozzle arrangement.

Therefore, a comparably big amount of fluid is collected in the interface region between the nozzle arrangement and the connector. When the nozzle arrangement is removed from the connector or handpiece, this results in a comparably high risk of a droplet formation in said interface region. This droplet, in turn, could get into a channel or line, transporting the powder-gas-mixture, when the nozzle arrangement is reconnected to the connector. However, such an interaction between water and the powder-gas-mixture increases the risk of clogging the channel, along which the powder-gas-mixture is transported through the handpiece and/or the nozzle arrangement.

US 2003 180 684 A1 discloses a construction that tries to separate a connection for an air-powder and a connection of water in order to avoid mixing of water and powder.

CN 209 107 639 U discloses a dental blasting machine including a housing in which an inner frame is provided. The inner frame has a water inlet and a through hole. The water inlet and the through hole are spaced apart in the radial direction of the inner frame.

EP 1 354 565 A1 discloses a handpiece for cleaning tooth surfaces comprising a grip body equipped, at one end, with a fitting for conduits that supply an air and powered mixture and water, respectively.

EP 2 965 708 A2 discloses a nozzle for a dental handpiece. The handpiece is composed of a connector portion to be connected to a handpiece body, and a nozzle body, which is provided near its end with a notch of a substantially rectangular section cut-out from the front face into the lateral faces.

Considering the prior art, it is an object of the present invention to provide an assembly or a handpiece, which improves handling of the handpiece, in particular by reducing a risk for clogging. Furthermore, it is desirable to simplify the handling of the handpiece, for example by incorporating new functionalities into the handpiece.

The object is achieved by a handpiece including the features of claim 1, a system including the features of claim 12 and a method including the features of claim 13.

Further embodiments are described in the dependent claims, the description and the figures.

An aspect of the present invention is a handpiece, for a powder jet device, which in operation is used for treating a tooth,the handpiece being configured to be connected in a mounted state to a nozzle arrangement having a first supply line for transporting a powder gas-mixture and a second supply line for transporting a fluid,the handpiece comprising- a connector having a first side for connecting the connector to a supply system and a second side for connecting the connector to the nozzle arrangement, the powder-gas-mixture and the fluid being transported from the supply system to the nozzle arrangement through the connector via a transport direction during operation, wherein the connector comprises a sleeve like first component and a sleeve like second component, the first component being made from a metal and the second component made from plastic, in particular a polymer, and the first component and the second component are connected to each other via a form-fitting and/or a non-positive locking connection.

According to preferred embodiment of the present invention, a handpiece for a powder jet device, which in operation is used for treating a tooth, is provided, the handpiece being configured to be connected in a mounted state to a nozzle arrangement having a first supply line for transporting a powder-gas-mixture and a second supply line for transporting a fluid, preferably water,
the handpiece comprising
   - a connector having a first side for connecting the connector to a supply system and a second side for connecting the connector to the nozzle arrangement, the powder-gas-mixture and the fluid being transported from the supply system to the nozzle arrangement through the connector via a transport direction during operation,
wherein the second side includes
   -- a first interface section for connecting the first supply line to the connector and
   -- a second interface section for connecting the second supply line to the connector, the first interface section and the second interface section being spaced from each other, in particular in a direction perpendicular to the transport direction, and
   - a fastening means, in particular a nut, the fastening means fixing the nozzle arrangement to the component in the mounted state.

Contrary to the state of the art, it is provided according to the present invention to use a fastening means, in particular a nut, for connecting the nozzle arrangement to the connector. Therefore, it is no longer necessary to screw the nozzle arrangement to the second side of the connector by a rotational movement. Instead it is possible, to plug the nozzle arrangement into the connector and to subsequently fix the nozzle arrangement to the connector by using the fastening means. As a result, there is no need for a rotationally symmetric shape of the second side, to which the nozzle arrangement is connected by a screwing mechanism otherwise. Instead of being rotationally symmetric to a central axis of the handpiece, the shape and location of the second interface section are freely selectable. The central axis is preferably defined by a course of a first channel in the connector, the first channel transporting the powder gas mixture. As a consequence, it is possible to space the first interface section and a second interface section such that the probability of transferring a droplet from the second interface section to the first interface section is reduced. Moreover, it is possible to reduce the cross section of a second channel, which transport the fluid in the handpiece to the second supply line, such that the amount of fluid at the second side is significantly reduced, when the nozzle arrangement is removed from the connector. In particular, the first interface section and the second interface section are separated from each other and the second interface section does not surround the first interface section.

As a consequence, the probability of a droplet being accidently moved into the first channel, in which the powder-gas-mixture is transported through the handpiece, in particular through the connector, is reduced as well as the probability of clogging the first channel and/or the first supply line. This makes the handpiece more reliable in operation, in particular in case of frequently separating and reconnecting the nozzle arrangement and the connector.

The fastening means is preferably moveable, in particular rotatable, relative to the connector. Furthermore, it is conceivable that the fastening means is non-integral with the connector. As a consequence, it is avoided that the connection between the nozzle arrangement and the connector is established by the nozzle arrangement and the connector itself, for example by a non-positive locking mechanism. As a result using a separate fastening means reduces the risk of damaging the nozzle arrangement and the connector during the mounting process, since otherwise residual stresses are generated, which lead to cracks. Preferably, the fastening means establishes a form fitting connection in a direction parallel to the transport direction or the central axis. Besides a nut, it is also thinkable that the fastening means is a clip.

In particular, the powder used in treatment of tooth is sodium bicarbonate, glycine, calcium carbonate, aluminum trihydroxide, erythritol, hydroxylapatite or threhalose. The handpiece has an extension along the handpiece axis that is larger than in any other direction. The handpiece has a substantially cylindrical shape extending along the handpiece axis. The handpiece axis is the axis of the cylindrical shape. Therefore, the handpiece is advantageously tangible for a user. The handpiece is a hollow body defining an accommodation space within the handpiece. As a result, the user's hand holding the handpiece is well separated from lines existing within the handpiece. Further, the handpiece is a separate element, which can be connected to a nozzle arrangement at a first distal handpiece side and to a supply system at a second proximal handpiece side. That is, the supply system communicates with the nozzle arrangement via the handpiece, in case the three elements are connected to each other. At the distal handpiece side, the handpiece has a smaller diameter than at the proximal handpiece side. As a result, the handpiece has a center of gravity which is located closer to the proximal handpiece side. Therefore, the operability of the handpiece is improved.

According to an aspect of the present invention, the nozzle arrangement is an elongated member. The nozzle arrangement is attachable or attached to the handpiece at the distal handpiece side. The nozzle arrangement has a first proximal nozzle arrangement side and an opposite second distal nozzle arrangement side. The nozzle arrangement is attached to the first distal handpiece side with the first proximal nozzle arrangement side. The nozzle arrangement has the first supply line configured to transfer powder mixed with air, and the second supply line configured to transfer water. At least a part of the first supply line protrudes from the first proximal nozzle arrangement side of the nozzle arrangement. The nozzle arrangement is configured to discharge powder mixed with air and water onto a tooth of a patient to be treated. Within the nozzle arrangement, the first supply line and the second supply line are merged into one discharge line. The discharge line is configured to discharge the powder mixed with air and water to the second distal nozzle arrangement side. The nozzle arrangement is configured to be a disposable product. Alternatively, the nozzle arrangement is an element that can be used several times. In this case, the nozzle arrangement is configured to be sterilized several times without being damaged. Therefore, the nozzle arrangement is made of metal.

According to a further aspect of the present invention, the tubular connector is accommodated within the handpiece. The connector has an elongated body. The connector includes an axis (e.g. a central axis or a rotational axis) that is aligned with the handpiece axis even though the handpiece is usually not symmetrical with regard to such axis. In other words, the connector is positioned inside the handpiece in a centralized manner (i.e. within the accommodation space of the handpiece). The first axial side and the second axial side of the connector are located at opposite sides of the connector. The connector is arranged within the handpiece such that the first axial side of the connector is closer to the second proximal handpiece side than the second axial side of the connector which extends towards the distal side of the handpiece. The connector has a smaller outer diameter at its second axial side as compared to an outer diameter at its first axial side. In other words, the connector has a tapered shape towards the second axial side of the connector. As a result, the space within the handpiece is effectively used.

Preferably, it is provided that the nozzle arrangement includes a nozzle head, the first supply line and the second supply line, being at least partially included inside the nozzle head. Furthermore, the nozzle arrangement further includes tubes, in particular solid tubes, as first supply line and/or as second supply line, wherein the tubes for the first supply and/or the second supply line protrude from a side of the nozzle head facing to the connector in the mounted state. The protruding parts of the tubes are inserted into the handpiece in the mounted state.

The nozzle arrangement is preferably connected to the connector by a translation movement during a mounting process, preferably in a direction parallel to this central axis of the handpiece, and subsequent to this translation movement, the inserted tube of the first supply line and/or the tube of the second supply line is fixed to the connector by using the fastening means. Preferably, the fastening means is a nut being mounted by using a tool, which is inserted at the first side of the connector, wherein the tool passes through the inside of the connector up to the fastening means. Subsequently, the tool is used for rotating the fastening means.

The supply system being connected to the first side of the connector preferably comprises a hose or cord, which connects the handpiece and a stationary unit or base station. The base station or stationary unit provides the powder-gas-mixture, in particular by mixing powder and gas to form the powder-gas-mixture, and further provides the pressure for delivering the powder-gas-mixture to the handpiece and for ejecting the powder-gas-mixture from the nozzle head. Furthermore, it is provided that the first side of the connector is profiled such that the end of the hose or cord of the supply system can be plugged into the first side, in particular fixed to the first side in a non-positive locking and/or a form fitting manner. Preferably, the supply system supplies the handpiece with both the powder-gas-mixture and the fluid.

According to a preferred embodiment, in the mounted state the connector and the nozzle arrangement are fixed to each other in a non-rotatable manner. In particular, the skilled person understands the term "non-rotatable manner" such that there is no screwing possible or no rotational movement between the connector and the nozzle arrangement is possible without destroying the handpiece or the nozzle arrangement, in particular after the nozzle arrangement being inserted into the connector during the mounting process. As a result, the orientation of the connector and the nozzle arrangement to each other is always the same in the mounted state. This allows a proper connection between the nozzle arrangement and the connector, as well as inserting additional components that connect the connector with the nozzle arrangement, such as wires or fibers. This can increase the functionality of the handpiece, since new components can be included into the handpiece.

Preferably, in the mounted state the first supply line is plugged into the first interface section and of the second supply line is plugged into the second interface section. In particular, the first interface section and/or the second interface section includes a hole, in particular a through hole, or a recess into which the first supply line and/or the second supply line are respectively inserted along a inserting direction being preferably parallel to the central axis and/or transport direction. Thus, it is possible that by inserting or plugging the first supply line into the first interface section and or/the second supply line into the second interface section a non-rotatable fixation between the connector and the nozzle arrangement is established.

Preferably, the first interface section includes a receiving section, preferably in form of a socket, wherein in the mounted state the first supply line passes or extends through the receiving section and the fastening means is connected to the first supply line at a side of the receiving section facing away from the nozzle arrangement. Preferably, the fastening means is located such that a free access to the fastening means is possible from the first side of the connector. As a consequence, it is possible to use a tool, which passes through the connector for fixing the fastening means and consequently allows fixing the nozzle arrangement to the connector.

Preferably, the handpiece comprises a first channel for transporting the powder-gas-mixture and a second channel for transporting the fluid through the connector. Preferably, the second channel is located radially offset to the first channel with respect to the central axis, the first channel being located essentially at the central axis of the handpiece and/or the connector.

Preferably, the first cross section of the first channel, in particular directly upstream to the first supply line, is greater than a second cross section of the second channel, in particular directly upstream to the second supply line. The cross section of the second channel, in particular of the part of the second channel being located directly upstream to the second supply line, mainly corresponds to the cross section of the second supply line. As a result, in the second interface section less fluid is collected, and consequently the risk for formation of fluid droplets is reduced in the interface region between the nozzle arrangement and the connector.

According to the invention, it is provided that connector comprises a sleeve-like first component and a sleeve-like second component, the first component being made from a metal and the second component being made from plastic, in particular a polymer. By using a connector, having at least two components, namely the first component and the second component, allows using plastic for the second component. This reduce the weight of the handpiece and simplifies handling of the handpiece, advantageously.

According to the present invention, the first component and the second component are connected to each other by a form-fitting connection and/or a non-positive locking connection. Thus, the first and the second component are attached to each other. Preferably, the second component includes the second side of the connector and therefore is not rotatable against the nozzle arrangement about a central axis of the handpiece in the mounted state.

In particular, the second component includes a transmitter and/or a receiver. Using a plastic material, in particular a porous material, for realizing the second component allows sending or receiving signals, which were transmitted through the second component. As a result, it is possible to communicate with a transmitter and/or receiver being inserted into the supply system, in particular, into the cord or hose of the supply system, being connected to the first side of the connector. For example, this allows exchanging information about the state of the handpiece such as the number of treatments performed by the handpiece and/or type of the handpiece. As consequence, the transmitter and/or receiver of the connector can inform a stationary unit about the need of maintenance and/or specific configurations being needed for the handpiece, which is currently connected to the supply system, in particular the stationary system. Furthermore, it is possible to guarantee that the proper supply system is connected to the handpiece.

Preferably, the handpiece comprises a wire, the wire being preferably connected to the nozzle arrangement, more preferably to a light source being incorporated into the nozzle arrangement. The non-rotational fixation between the nozzle arrangement and the connector allows using a wire or fiber, which connects the connector and the component being incorporated inside the into no nozzle arrangement, since thus a twisting of the wire can be avoided, which otherwise occur when the nozzle arrangement is screwed into the connector.

Preferably, a housing is provided, the housing surrounding the connector and being at least partially spaced from the connector in a radial direction and/or in a direction being perpendicular to the transport direction. In particular, it is provided that the housing has mainly a tubular shape, being in particular completely rotationally symmetric. This simplifies gripping and therefore improves handling of the handpiece.

Preferably, the handpiece has an exhaust opening for ventilation of the first channel. Such a ventilation or exhaust opening suppresses a piston effect, which otherwise might occur at the second side of the connector. Such a piston effect would otherwise increase the risk of a droplet formation, the droplet getting inside the first channel. Therefore, by using a connector having such an exhaust opening the formation of a bundle inside the first channel and therefore a clogging of the first channel. The exhaust opening preferably represents an opening in the first channel, connecting the first channel to a space between the housing and the connector.

Another aspect of the present invention is an assembly of a nozzle arrangement and a handpiece according to the present invention. All specifics and benefits being discussed in context of the handpiece apply analogously for the assembly and vice versa.

Another aspect of the present invention concerns a method for connecting a nozzle arrangement and a handpiece according to the present invention, comprising
- plugging the first supply into the first interface section and/or plugging the second supply line into the second interface section and
- fixing the nozzle arrangement by means of a fastening means, in particular not. The specifics and benefits being discussed in context of the handpiece applies analogously to the method of connecting the nozzle arrangement to the connector.

Wherever not already described explicitly, individual embodiments or their individual aspects and features can be combined or exchanged with one another without limiting or widening the scope of the described invention, whenever such a combination or exchange is meaningful and in the sense of this invention. Advantages, which are described with respect to one aspect of the present invention are, wherever applicable also advantages of other aspects of the present invention.

In the drawings is:
- **Fig. 1**: an assembly of a handpiece and a nozzle arrangement according to the prior art,
- **Fig. 2**: an assembly of a handpiece and a nozzle arrangement according to a first embodiment of the present invention in a cross sectional view,
- **Fig. 3**: an assembly of a handpiece and a nozzle arrangement according to a second embodiment of the present invention in a cross sectional view and
- **Fig. 4**: an assembly of a handpiece and a nozzle arrangement according to third embodiment of the present invention in a perspective view.

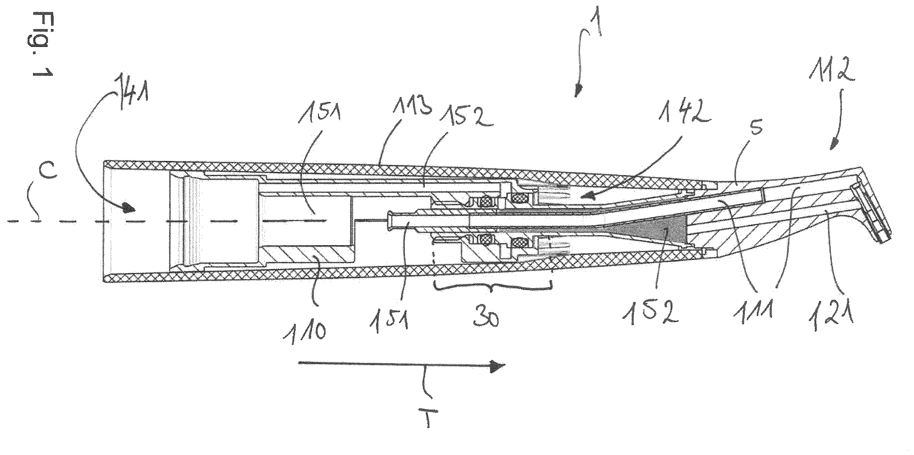

In **figure 1** an assembly of a handpiece 1 and a nozzle arrangement 112 according to the prior art is illustrated. Such an assembly is preferably part of a powder jet device, being used in operation for treating a tooth, in particular for removing coating, colorings and/or biofilms from the surface of a tooth. For effectively removing coverings, colorings and/or biofilms from the surface of the tooth an abrasive powder is used in the powder-gas-mixture, which in operation is directed to the tooth by using the handpiece 1, wherein the nozzle arrangement 112 ejects the powder-gas-mixture towards the surface of the tooth.

In particular, it is provided the nozzle arrangement 112 comprises a first supply line 111 and a second supply line 121. The first supply line 111 transports the powder-gas-mixture inside the nozzle arrangement 2 and/or the second supply line 121 transports a fluid through the nozzle arrangement 2. In particular, the nozzle arrangement 112 includes a nozzle head 5, through which the first supply line 111 and the second supply line 121 extend. Preferably, the nozzle head 5 is configured such that the ejected powder-gas-mixture is surrounded by the fluid being transported via the second supply line 121. The handpiece 1 is used by an operator to orientate the nozzle arrangement 112, in particular the nozzle head 5.

Preferably, the handpiece 1 comprises a connector 110, having a first side 141 for connecting the connector 110 to a supply system (not shown) and a second side 142 for connecting the connector 110 to the nozzle arrangement 112. The supply system preferably includes a hose or cord (not shown), which transports the powder-gas-mixture and/or fluid to the handpiece 1, preferably from a stationary station (not shown). Preferably, the connector 110 is configured such that the hose of the supply system can be inserted and/or plugged into the first side 141 of the component 110. Furthermore it is provided that the powder-gas-mixture and the fluid are transported during operation along a transport direction T through the connector 10.

The second side 142 is opposite to the first side 141 along the transporting direction T and preferably the connector 110 is arranged inside a housing 113. Further, the connector 110 comprises a first channel 151 for transporting the powder-gas-mixture inside the connector 110 and/or a second channel 152 for transporting the fluid inside the connector 110 and/or the handpiece 1. In particular, a part of the second channel 152, preferably the part being directly upstream to the nozzle head 5, in particular to the second supply line 121 of the nozzle arrangement 112, is formed by the handpiece 1 and the mounted nozzle arrangement 112, preferably by a clearance or free space between the handpiece 1 and the nozzle arrangement 112 in the mounted state in an interface region, in which a part of the nozzle arrangement 112 is inserted into the handpiece 1.

According to the prior art the nozzle arrangement 112 is typically connected to the handpiece 1, in particular to the connector 110, by a screwing mechanism, wherein the nozzle arrangement 112 is screwed into a screwing arrangement 30 being formed at the second side 142 of the connector 10. For connecting the nozzle arrangement 112 to the connector 110, the nozzle arrangement 112, in particular the nozzle head 5, is rotated around a central axis C of the handpiece 1. Due to the screwing, being necessary for connecting the nozzle arrangement 112 to the connector 110, the assembly forms a part of the second channel 152, being located directly upstream to the second supply line 121. This part is shaped in a conical manner or funnel like.

This shape allows rotating the nozzle arrangement 112 relative to the connector 110 of the handpiece 1 to realize the screwing connection. As a result, a comparably large volume of water is formed at the end of the second channel 152 in the part, being located directly upstream to the second supply line 121 of a nozzle arrangement 112, in particular in the interface region between the nozzle arrangement 112 and the handpiece 1. As a result such a shape, however, has the disadvantage of droplets being left after removing the nozzle arrangement 112 from the hand piece 1. Such droplets might, in turn, move inside the first channel 151 and/or the first supply line 111 of the nozzle arrangement 112, increasing the risk of forming a bundle, which clogs the first channel 151 and/or the first supply line 111, when interacting with the powder-gas-mixture, being transported through the first channel 151 and the first supply line 111.

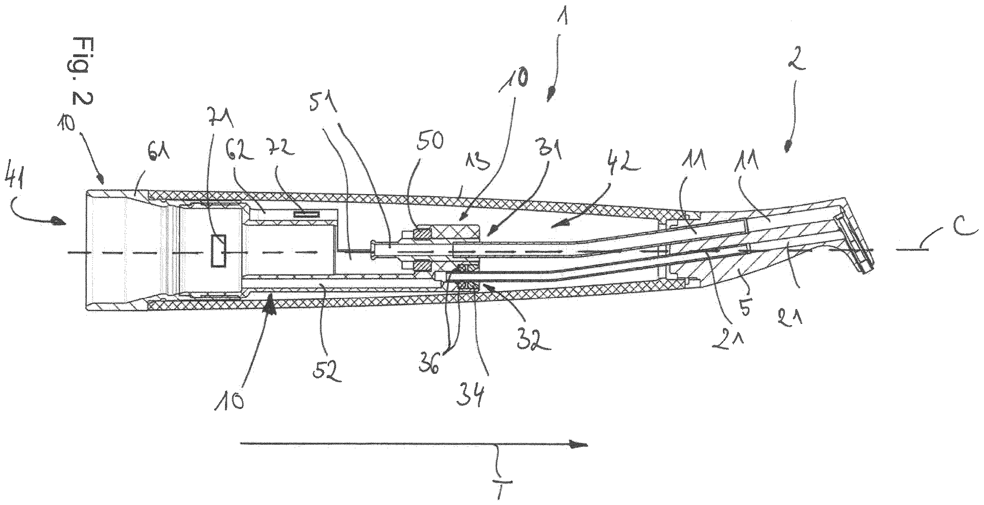

In **figure 2** an assembly of a handpiece 1 and a nozzle arrangement 2 according to a first embodiment of the present invention is illustrated in a cross sectional view. The connector 10 of figure 2 also includes a first side 41 and a second side 42. Contrary to the assembly of figure 1 the embodiment of figure 2 uses another connecting mechanism for connecting the nozzle arrangement 2 to the connector 10. Preferably, it is provided that the nozzle arrangement 2 comprises a first supply line 11 and a second supply line 21. The first supply line 11 and the second supply line 21 protrude from a side of the nozzle head 5, facing to the connector 10 in the mounted state. Preferably, the first supply line 11 and/or the second supply 21 line are tubes, which extends from the inside of the nozzle head 5 to the connector 10 of the handpiece 1. Preferably, the tubes of the first supply line 11 and the second supply line 21 are made from a solid material, such as metal. Contrary to the screwing arrangement 30 illustrated in figure 1 it is provided that the second side 42 of the connector 10 includes a first interface section 31 for connecting the first supply line 11 to the connector 10 and a second interface section 32 for connecting the second supply line 21 to the connector 1, the first interface section 31 and the second interface section 32 being spaced from each other, in particular in a direction perpendicular to the transport direction T and/or the central axis C of the handpiece 1. By using a first interface section 31 and a second interface section 32, it is advantageously possible to reduce a size of a cross-section of the second channel 52, in particular directly upstream to the second interface section 32, since the second channel 52 need no longer to be completely rotationally symmetric to the central axis C, being necessary for the screwing mechanism in the embodiment of figure 1.

The reduced cross section of the second channel 52 in the part directly upstream to the second supply line 21 of the nozzle arrangement 2 automatically leads to a decrease of the water amount being possibly collected in the interface region at the second side 42, in particular in the second interface section 32. Further, it is possible to reduce the probability of a droplet getting into the first channel 51 and/or the first supply line 11 unintentionally, since the second interface section 32 is spaced from the first interface section 31.

For realizing such an arrangement of the first interface section 31 and the second interface section 32, it is provided that the nozzle arrangement 2 is connected to the connector 10 by means of a fastening means 50 instead of a screwing mechanism. Preferably, the fastening means 50 is a nut. In the embodiment of figure 2, the first supply line 11 is inserted into a receiving section 19 during the mounting process, the first supply line 11 extending through the receiving section 19. In particular, the receiving section 19 is formed as a hole in a socket, being located at the second side 42 of the connector 10. In particular, the socket is located in a region of the central axis C in a mounted state, i. e. central in the handpiece 1 in a plane perpendicular to the transport direction T. The first supply line 11, passing through the receiving section 19, is fixed to connector 10 by means of the fastening means 50, being screwed to the first supply line 11 at a site of the receiving section 19 facing away from the nozzle arrangement 2 in the mounted state. Using a fastening means 50 and inserting the first supply line 11 into the first interface section 31 and the second supply line 21 into the second interface section 32 guarantees that the connector 10 and the nozzle arrangement 2 cannot be rotated to each other around the central axis C of the handpiece 1. The non-rotational arrangement of the connector 10 and the nozzle arrangement 2 allows a second interface section 32 being not formed completely rotationally symmetric to the central axis C. This, in turn, allows to select freely the shape and location of the second channel 52, in particular of the part of the second channel 52, being located directly upstream to the second supply line 21 and further allows the separation of the second interface section 32 from the first interface section 31.

Furthermore, it is provided that the connector 10 is covered by a housing 13. The housing 13 has a first front end 81 and a second front end 82, being in a direction parallel to transport direction T opposite to the first front end 81. At the first front end 81 the nozzle arrangement 2, in particular the first supply line 11 and the second supply line 21, are inserted into the handpiece 1, in particular the housing 13, until the nozzle head 5 abuts at the front end 81 of the housing 13.

Furthermore, it is provided that the second interface section 32 includes a sealing means 36 and/or guiding means 34. The guiding means 34 simplifies introduction of the second supply line 21 into the second interface section 32, for example by a diameter of the hole in the second interface section 32, which decreases along the insertion direction. By using the sealing means 36 it is possible to avoid that fluid droplets can leave the second interface section 32 in the mounted state, in particular during operation. Thus, the probability of an interaction between fluid droplet, on the one hand, and powder-gas-mixture on the other hand, further decreases.

Moreover, it is provided in the embodiment of figure 2 that the connector 10 comprises a sleeve-like first component 61 and a sleeve-like second component 62, the first component 61 being made from metal and the second component 62 being made from a plastic material, preferably a polymer. Realizing the second component 62 as a plastic component reduces the weight of the handpiece 1 significantly. Thus, the handling of the handpiece 1 by the operator is simplified.

In particular, it is provided that the second component 62 acts with the second front end 82 of the housing 31 in a form-fitting and/or non-positive manner, in particular such that the housing 13 is sandwiched between the second component 62 and the nozzle head 5 in the mounted state. In particular, the second component 62 has a collar section protruding radially, the collar section interacting with the second front end 82 of the housing 13 in a form-fitting manner.

Furthermore, it is preferably provided that the connector 10, in particular, the second component 62 includes a receiver 72 and/or transmitter 71, being preferably inserted into the second component 62 such that a receiver 72 and/or transmitter 71 can communicate with a transmitter 71 and/or receiver 72 being located inside the hose or cord of the supply system. By choosing a proper material for the second component 62, in particular a material being porous and/or non-metallic, it is possible to establish a communication, in particular a wireless communication between the receiver 72 and the transmitter 71. For example, a porous second component allows electromagnetic waves to pass through the second component 62 for interchanging information, i. e. signals, between the emitter and the receiver.

Such a communication might be used for guaranteeing that the proper cord/hose is used for the handpiece 1, in particular for the connector 10. It is also conceivable that certain settings of the handpiece 1/stationary station or a type or model of the handpiece 1/stationary station are transferred from the handpiece 1 to the supply system or vice versa. Furthermore, it is possible to inform the supply system about the number and duration of the previous treatments such that, for example maintenance recommendation can be given, for example by the stationary station.

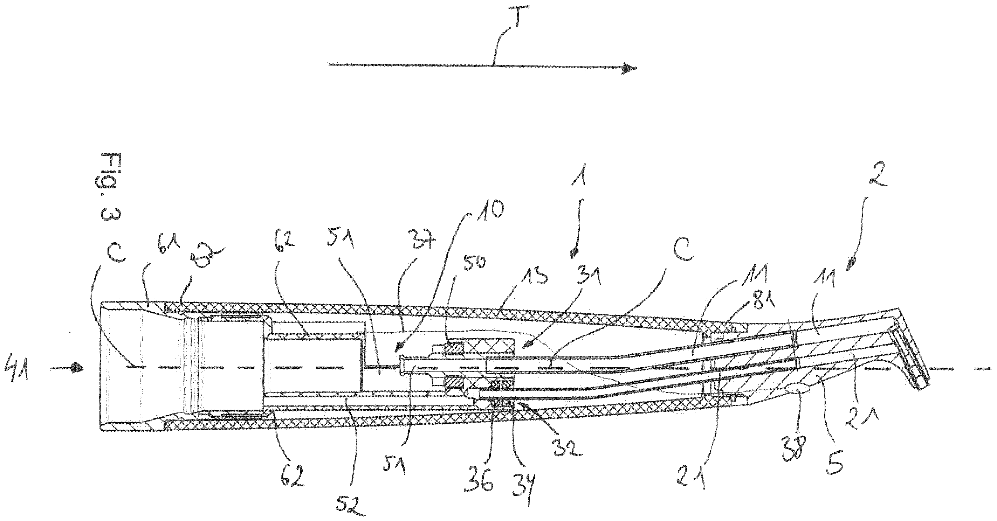

In **figure 3** an assembly of a handpiece 1 a nozzle arrangement 2, according to a second embodiment of the present invention is illustrated. In particular, the embodiment of figure 3 mainly differs from the embodiment illustrated in figure 2 by using a wire 37 or fiber, being located inside the housing 13, the wire 34 and/or fiber being connected to an electronic component, for example a light source 38 in the nozzle arrangement 2, in particular in the nozzle head 5. Due to the rotational fixed arrangement between the connector 10 on one hand and the nozzle arrangement 2 on the other hand, it is possible in an advantageous manner to use wires 37 to connect the connector 10 with the nozzle arrangement 2. In contrast to such a non-rotational arrangement between the connector 10 and the nozzle arrangement 2, the rotational arrangement between the nozzle arrangement 2 and the component 10 prohibits such a use of wire or fiber, since this would cause a twist of the fiber during the mounting process, which could even damage the wire 37 or the fiber. In particular, the rotational fixed arrangement between the connector 10 and the nozzle arrangement 2 prevents the wires 37 and/or fibers from being twisted due to a relative rotation of the connector 10 and the nozzle arrangement 2.

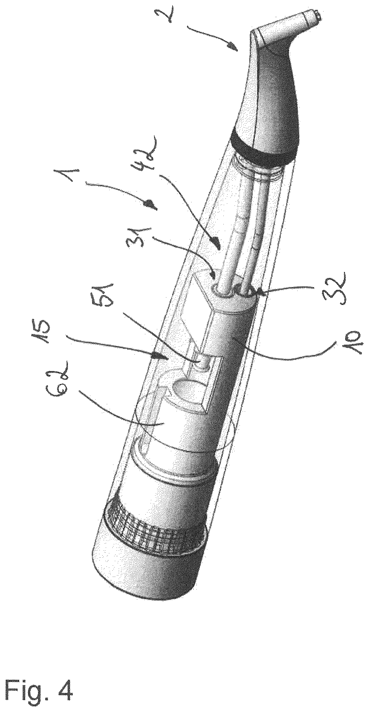

In **figure 4****,** an assembly of the handpiece 1 and the nozzle arrangement 2, according to a third embodiment of the present invention is shown in a perspective view. The further embodiment corresponds to the embodiments of the figures 2 and 3 and just highlights the shape of the connector 10. In particular, the connector 10 includes an exhaust opening 15. The exhaust opening 15 allows ventilation of the first channel 51, in particular the end of the part of the first channel 15 being located directly upstream to the first supply line 11. Such a ventilation suppresses a piston effect, which otherwise sucks the droplet of water droplet out of the second channel 52 towards to the first interface section 31, when the nozzle arrangement 2 is removed from the handpiece 1. By using such an exhaust opening 15, the probability that a water droplet is transferred into the first channel 51 and/or first supply line 11, is further decreased.

### Reference signs:

- 1: handpiece
- 2, 112: nozzle arrangement
- 5: nozzle head
- 10, 110: connector
- 11, 111: first supply line
- 13, 113: housing
- 15: exhaust opening
- 19: receiving section
- 21, 121: second supply line
- 30: screwing section
- 31: first interface section
- 32: second interface section
- 32: guiding region
- 34: sealing means
- 37: wire
- 38: light source
- 41, 141: first side
- 42, 142: second side
- 50: fastening means
- 51, 151: first channel
- 52, 152: second channel
- 61: first component
- 62: second component
- 71: transmitter
- 72: receiver
- 81: first front end
- 82: second front end
- T: transport direction
- C: Central axis

## Claims

1. A handpiece (1), for a powder jet device, which in operation is used for treating a tooth,
the handpiece (1) being configured to be connected in a mounted state to a nozzle arrangement (2) having a first supply line (11) for transporting a powder gas-mixture and a second supply line (21) for transporting a fluid,
the handpiece (1) comprising
- a connector (10) having a first side (41) for connecting the connector (10) to a supply system and a second side (42) for connecting the connector (10) to the nozzle arrangement (2), the powder-gas-mixture and the fluid being transported from the supply system to the nozzle arrangement (2) through the connector (10) via a transport direction (T) during operation, **characterized in that** the connector (10) comprises a sleeve like first component (61) and a sleeve like second component (62), the first component (61) being made from a metal and the second component (62) made from plastic, in particular a polymer, and the first component (61) and the second component (62) are connected to each other via a form-fitting and/or a non-positive locking connection.

2. The handpiece according to claim 1, wherein the second side (42) includes
-- a first interface section (31) for connecting the first supply line (11) to the connector (10) and
-- a second interface section (32) for connecting the second supply line (21) to the connector (10), the first interface section (31) and the second interface section (32) being spaced from each other, in particular in a direction perpendicular to the transport direction (T), and
- a fastening means (50), in particular a nut, the fastening means (50) fixing the nozzle arrangement (2) to the connector (10) in the mounted state by connecting the first supply line of the nozzle arrangement to the fastening means (50),

3. The handpiece (1) according to one of the preceding claims, wherein in the mounted state the connector (10) and the nozzle arrangement (2) are fixed to each other in a non-rotatable manner.

4. The handpiece (1) according to one of the preceding claims, wherein in the mounted state the first supply line (11) is plugged into the first interface section (31) and/or the second supply line (21) is plugged into the second interface section (32).

5. The handpiece (1) according to one of the preceding claims, wherein the first interface section (31) includes a receiving section (19), preferably in form of a socket, wherein in the mounted state the first supply line (11) passes through the receiving section (19) and the fastening means (50) is connected to the first supply line (11) at a side of the receiving section (19) facing away from the nozzle arrangement (2).

6. The handpiece (1) according to one of the preceding claims, wherein the handpiece (1) comprises a first channel (51) for transporting the powder-gas mixture and a second channel (52) for transporting the fluid through the connector (10).

7. The handpiece (1) according to claim 5, wherein a first cross section of the first channel (51), particular in a region directly upstream to the first supply line (11), is greater than a second cross section of the second channel (52), in particular in a region directly upstream to the second supply line (21).

8. The handpiece (1) according to one of the preceding claims, wherein the second component includes a transmitter (71) and/or receiver (72) for receiving and/or transmitting waves.

9. The handpiece (1) according to one of the preceding claims, wherein the handpiece (1) comprises a wire (37), the wire (37) being preferably connected to the nozzle arrangement (2), preferably to a light source (38), being incorporated into the nozzle arrangement (2).

10. The handpiece (1) according to one of the preceding claims, wherein a housing (13) is provided, the housing (13) surrounding the connector (10) and being at least partially spaced from the connector (10) in a radial direction.

11. The handpiece (1) according to one of the preceding claims, wherein the handpiece (1) has an exhaust opening (15) for ventilation of the first channel (51).

12. An assembly comprising a nozzle arrangement (2) and a handpiece according to one of the preceding claims.

13. A method for connecting a nozzle arrangement (2) and a handpiece according comprising:
- providing the assembly according to claim 12;
- plugging the first supply line (51) into the first interface section (31) and/or plugging the second supply line (52) into the second interface section (32)
- fixing the nozzle arrangement (2) to the connector (10) by means of a fastening means (50), in particular a nut.

## Patentansprüche

1. Handstück (1) für ein Pulverstrahlgerät, das bei seiner Verwendung zur Behandlung eines Zahns dient,
wobei das Handstück (1) dazu konfiguriert ist, in einem montierten Zustand an eine Düsenanordnung (2) angeschlossen zu werden, die eine erste Versorgungsleitung (11) zum Transportieren eines Pulver-Gas-Gemischs und eine zweite Versorgungsleitung (21) zum Transportieren eines Fluids aufweist,
wobei das Handstück (1) folgendes umfasst:
ein Verbindungsstück (10) mit einer ersten Seite (41) zum Anschließen des Verbindungsstücks (10) an ein Versorgungssystem und einer zweiten Seite (42) zum Anschließen des Verbindungsstücks (10) an die Düsenanordnung (2), wobei das Pulver-Gas-Gemisch und das Fluid während der Verwendung durch das Verbindungsstück (10) über eine Transportrichtung (T) von dem Versorgungssystem zu der Düsenanordnung (2) transportiert werden, **dadurch gekennzeichnet dass** das Verbindungsstück (10) eine hülsenartige erstes Komponente (61) und eine hülsenartige zweite Komponente (62) aufweist, wobei die erste Komponente (61) aus einem Metall und die zweite Komponente (62) aus Kunststoff, insbesondere einem Polymer, gefertigt ist und die erste Komponente (61) und die zweite Komponente (62) über eine formschlüssige und/oder eine kraftschlüssige Verbindung miteinander verbunden sind.

2. Handstück gemäß Anspruch 1, wobei die zweite Seite (42) Folgendes umfasst:
- einen ersten Schnittstellenbereich (31) zum Anschließen der ersten Versorgungsleitung (11) an das Verbindungsstück (10) und
- einen zweiten Schnittstellenbereich (32) zum Anschließen der zweiten Versorgungsleitung (21) an das Verbindungsstück (10), wobei der erste Schnittstellenbereich (31) und der zweite Schnittstellenbereich (32) voneinander beabstandet sind, insbesondere in einer Richtung senkrecht zu der Transportrichtung (T), und
- ein Befestigungsmittel (50), insbesondere eine Mutter, wobei das Befestigungsmittel (50) die Düsenanordnung (2) im montierten Zustand an dem Verbindungsstück (10) fixiert, indem die erste Versorgungsleitung der Düsenanordnung an dem Befestigungsmittel (50) angeschlossen wird,

3. Handstück (1) gemäß einem der vorangehenden Ansprüche, wobei im montierten Zustand das Verbindungsstück (10) und die Düsenanordnung (2) in nicht drehbarer Weise aneinander befestigt sind.

4. Handstück (1) gemäß einem der vorangehenden Ansprüche, wobei im montierten Zustand die erste Versorgungsleitung (11) in den ersten Schnittstellenbereich (31) und/oder die zweite Versorgungsleitung (21) in den zweiten Schnittstellenbereich (32) eingesteckt ist.

5. Handstück (1) gemäß einem der vorangehenden Ansprüche, wobei der erste Schnittstellenbereich (31) einen Aufnahmebereich (19), vorzugsweise in Form einer Buchse, umfasst, wobei im montierten Zustand die erste Versorgungsleitung (11) durch den Aufnahmebereich (19) geführt ist und das Befestigungsmittel (50) an einer der Düsenanordnung (2) abgewandten Seite des Aufnahmebereichs (19) an die erste Versorgungsleitung (11) angeschlossen ist.

6. Handstück (1) gemäß einem der vorangehenden Ansprüche, wobei das Handstück (1) einen ersten Kanal (51) zum Transportieren des Pulver-Gas-Gemischs und einen zweiten Kanal (52) zum Transportieren des Fluids durch das Verbindungsstück (10) aufweist.

7. Handstück (1) gemäß Anspruch 5, wobei ein erster Querschnitt des ersten Kanals (51), insbesondere in einem Bereich direkt stromaufwärts der ersten Versorgungsleitung (11), größer ist als ein zweiter Querschnitt des zweiten Kanals (52), insbesondere in einem Bereich direkt stromaufwärts der zweiten Versorgungsleitung (21).

8. Handstück (1) gemäß einem der vorangehenden Ansprüche, wobei die zweite Komponente einen Sender (71) und/oder Empfänger (72) zum Empfangen und/oder Senden von Wellen einschließt.

9. Handstück (1) gemäß einem der vorangehenden Ansprüche, wobei das Handstück (1) einen Draht (37) aufweist, wobei der Draht (37) vorzugsweise an die Düsenanordnung (2) angeschlossen ist, vorzugsweise an eine Lichtquelle (38), die in die Düsenanordnung (2) integriert ist.

10. Handstück (1) gemäß einem der vorangehenden Ansprüche, wobei ein Gehäuse (13) vorgesehen ist, wobei das Gehäuse (13) das Verbindungsstück (10) umschließt und in radialer Richtung zumindest teilweise von dem Verbindungsstück (10) beabstandet ist.

11. Handstück (1) gemäß einem der vorangehenden Ansprüche, wobei das Handstück (1) eine Auslassöffnung (15) zur Belüftung des ersten Kanals (51) aufweist.

12. Baugruppe, die eine Düsenanordnung (2) und ein Handstück gemäß einem der vorangehenden Ansprüche umfasst.

13. Verfahren zum Anschließen einer Düsenanordnung (2) und eines Handstücks, das folgende Schritte aufweist:
- Bereitstellen der Baugruppe gemäß Anspruch 12;
- Einstecken der ersten Versorgungsleitung (51) in den ersten Schnittstellenbereich (31) und/oder Einstecken der zweiten Versorgungsleitung (52) in den zweiten Schnittstellenbereich (32)
- Befestigen der Düsenanordnung (2) an dem Verbindungsstück (10) mittels eines Befestigungsmittels (50), insbesondere einer Mutter.

## Revendications

1. Pièce à main (1) pour un dispositif à jet de poudre utilisé, en fonctionnement, pour traiter une dent,
la pièce à main (1) étant conçue pour être connectée, à l'état monté, à une unité de buse (2) ayant une première conduite d'alimentation (11) pour transporter un mélange poudre-gaz et une deuxième conduite d'alimentation (21) pour transporter un fluide,
la pièce à main (1) comprenant
- un connecteur (10) ayant un premier côté (41) pour connecter le connecteur (10) à un système d'alimentation et un deuxième côté (42) pour connecter le connecteur (10) à l'unité de buse (2), le mélange poudre-gaz et le fluide étant transportés du système d'alimentation à l'unité de buse (2) à travers le connecteur (10) dans une direction de transport (T) pendant le fonctionnement, **caractérisée en ce que** le connecteur (10) comprend un premier composant (61) en forme de manchon et un deuxième composant (62) en forme de manchon, le premier composant (61) étant en métal et le deuxième composant (62) étant en matière plastique, en particulier en polymère, et le premier composant (61) et le deuxième composant (62) sont reliés l'un à l'autre par une liaison par coopération de forme et/ou par coopération de force.

2. Pièce à main selon la revendication 1,
dans laquelle le deuxième côté (42) comprend
-- une première section d'interface (31) pour connecter la première conduite d'alimentation (11) au connecteur (10), et
-- une deuxième section d'interface (32) pour connecter la deuxième conduite d'alimentation (21) au connecteur (10), la première section d'interface (31) et la deuxième section d'interface (32) étant espacées l'une de l'autre, en particulier dans une direction perpendiculaire à la direction de transport (T), et
- un moyen de fixation (50), en particulier un écrou, le moyen de fixation (50) fixant l'unité de buse (2) au connecteur (10), à l'état monté, par une connexion de la première conduite d'alimentation de l'unité de buse au moyen de fixation (50).

3. Pièce à main (1) selon l'une des revendications précédentes,
dans laquelle, à l'état monté, le connecteur (10) et l'unité de buse (2) sont fixés l'un à l'autre de manière non rotative.

4. Pièce à main (1) selon l'une des revendications précédentes,
dans laquelle, à l'état monté, la première conduite d'alimentation (11) est enfichée dans la première section d'interface (31) et/ou la deuxième conduite d'alimentation (21) est enfichée dans la deuxième section d'interface (32).

5. Pièce à main (1) selon l'une des revendications précédentes,
dans laquelle la première section d'interface (31) comprend une section de réception (19), de préférence sous la forme d'une douille,
à l'état monté, la première conduite d'alimentation (11) traverse la section de réception (19), et le moyen de fixation (50) est relié à la première conduite d'alimentation (11) sur un côté de la section de réception (19) détourné de l'unité de buse (2).

6. Pièce à main (1) selon l'une des revendications précédentes,
dans laquelle la pièce à main (1) comprend un premier canal (51) pour transporter le mélange poudre-gaz et un deuxième canal (52) pour transporter le fluide à travers le connecteur (10).

7. Pièce à main (1) selon la revendication 5,
dans laquelle une première section transversale du premier canal (51), en particulier dans une région directement en amont de la première conduite d'alimentation (11), est supérieure à une deuxième section transversale du deuxième canal (52), en particulier dans une région directement en amont de la deuxième conduite d'alimentation (21).

8. Pièce à main (1) selon l'une des revendications précédentes,
dans laquelle le deuxième composant comprend un émetteur (71) et/ou un récepteur (72) pour la réception et/ou l'émission d'ondes.

9. Pièce à main (1) selon l'une des revendications précédentes,
dans laquelle la pièce à main (1) comprend un fil (37), le fil (37) étant de préférence relié à l'unité de buse (2), de préférence à une source de lumière (38), incorporée dans l'unité de buse (2).

10. Pièce à main (1) selon l'une des revendications précédentes,
dans laquelle est prévu un boîtier (13), le boîtier (13) entourant le connecteur (10) et étant au moins partiellement espacé du connecteur (10) dans une direction radiale.

11. Pièce à main (1) selon l'une des revendications précédentes,
dans laquelle la pièce à main (1) présente une ouverture d'échappement (15) pour purger le premier canal (51).

12. Ensemble comprenant une unité de buse (2) et une pièce à main selon l'une des revendications précédentes.

13. Procédé de connexion d'une unité de buse (2) et d'une pièce à main, consistant à :
- fournir l'ensemble selon la revendication 12 ;
- enficher la première conduite d'alimentation (51) dans la première section d'interface (31) et/ou enficher la deuxième conduite d'alimentation (52) dans la deuxième section d'interface (32),
- fixer l'unité de buse (2) au connecteur (10) à l'aide d'un moyen de fixation (50), en particulier un écrou.
